Europäisches Patentamt

European Patent Office

Office européen des brevets

(11) Veröffentlichungsnummer: **0 362 950 B1**

## EUROPÄISCHE PATENTSCHRIFT

(45) Veröffentlichungstag der Patentschrift: **23.02.94**

(51) Int. Cl.5: **G02B 6/255**, G01B 11/00

(21) Anmeldenummer: **89202469.6**

(22) Anmeldetag: **02.10.89**

(54) **Verfahren zur Ermittlung der Position der Endfläche eines Lichtwellenleiters.**

(30) Priorität: **06.10.88 DE 3833970**

(43) Veröffentlichungstag der Anmeldung:
**11.04.90 Patentblatt 90/15**

(45) Bekanntmachung des Hinweises auf die
Patenterteilung:
**23.02.94 Patentblatt 94/08**

(84) Benannte Vertragsstaaten:
**DE FR GB**

(56) Entgegenhaltungen:

THE TRANSACTIONS OF THE I.E.C.E. OF JAPAN, Band E-68, Nr. 12, Dezember 1985, Seiten 836-842; T. HAIBARA et al.: "A fully automatic optical fiber arc-fusion splice machine"

PATENT ABSTRACTS OF JAPAN, Band 12, Nr. 86 (P-677)[2933], 18. März 1988, Seite 160; & JP-A-62 220 803

(73) Patentinhaber: **Philips Patentverwaltung GmbH**
**Wendenstrasse 35c**
**D-20097 Hamburg(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB**

(72) Erfinder: **Meininghaus, Wolfgang**
**Altrefrath 8**
**D-5060 Bergisch-Gladbach(DE)**
Erfinder: **Tietz, Wolfgang**
**Böckenbergstrasse 20**
**D-4630 Bochum(DE)**

(74) Vertreter: **Koch, Ingo, Dr.-Ing. et al**
**Philips Patentverwaltung GmbH,**
**Wendenstrasse 35c**
**D-20097 Hamburg (DE)**

EP 0 362 950 B1

**Beschreibung**

Die Erfindung bezieht sich auf ein Verfahren zur Ermittlung der Position der Endfläche eines Lichtwellenleiters (LWL) in einer in Achsrichtung des LWL verlaufenden Koordinatenrichtung x mit folgenden Verfahrensschritten:

- der Endbereich des LWL wird mit einer Videokamera aufgenommen, deren Zeilenrichtung in etwa parallel zur Achsrichtung des LWL verläuft,
- das Videosignal der Videokamera wird in einer Erfassungseinheit ausgewertet,
- gespeicherte Helligkeitsinformationen des Videosignals werden einem Steuerrechner zugeführt, welcher die Positionskoordinate der Endfläche des LWL ermittelt.

Ein derartiges Verfahren ist in der Schrift "Optical Fiber Fusion Splicer, SUMIOFCAS Type-34" der Firma "Sumitomo Electric" beschrieben.

Die Erfassung der mit hoher Frequenz aufeinanderfolgenden Informationen des Videosignals einer Videokamera bedingt einen erheblichen Aufwand für elektronische Schaltungselemente, insbesondere für die Umformung der analogen Videosignale in für die Speicherung und für den Rechner erforderliche digitale Signale. Ferner wird eine erhebliche Anzahl von Speicherplätzen benötigt.

Der Erfindung liegt die Aufgabe zugrunde, den Aufwand für ein Verfahren der eingangs genannten Art zu verringern.

Die Lösung gelingt durch folgende Verfahrensschritte:

- über die Erfassungseinheit werden für eine Erfassungsspalte in einer zur Zeilenrichtung senkrechten Richtung an einer Koordinatenstelle aufeinanderfolgende Intensitätswerte des Videosignals gespeichert
- vom Steuerrechner werden die gespeicherten Intensitätswerte in ein Spaltensignal $I_m$ umgeformt und gespeichert
- danach werden zeitlich aufeinanderfolgend in einem die Endfläche des LWL übergreifenden Bereich in gleicher Weise weitere Spaltensignale $I_m$ gebildet und gespeichert
- schließlich wird aus dem Verlauf $I_m = f(x)$ die Lagekoordinate der Endfläche des LWL ermittelt.

Die Erfassungseinheit tastet die mit der relativ niedrigen Zeilenfrequenz aufeinanderfolgenden Signale einer Erfassungsspalte ab. Die erforderlichen Analog/Digital-Wandler (A/D-Wandler) können dann sehr viel einfacher aufgebaut sein als wenn sie die Bildpunktfrequenz verarbeiten müßten. Nach der Auswertung der Information einer Erfassungsspalte durch den Steuerrechner können vor der Erfassung der Daten der folgenden Erfassungsspalte die belegten Speicherplätze gelöscht werden, so daß sie für die Speicherung neuer Daten frei sind. Folglich wird nur eine sehr geringe Anzahl von Speicherplätzen benötigt.

Das erfindungsgemäße Verfahren ist mit besonderem Vorteil für die Einstellung des Abstandes zwischen den Stirnflächen zweier optisch zu koppelnder LWL anwendbar und in vorteilhafter Anpassung dadurch gekennzeichnet, daß die Lagekoordinaten $x_{E1}$ und $x_{E2}$ der Endflächen benachbarter LWL ermittelt werden und daß vom Steuerrechner die axiale Verschiebung mindestens eines der LWL mittels einer Antriebsrichtung derart veranlagt wird, daß sich ein Sollabstand zwischen den Endflächen der LWL ergibt.

Eine besonders einfache Lösung ist dadurch gekennzeichnet, daß der Betrag des Spaltensignals mit einem Mittelwert der für eine Erfassungsspalte gespeicherten Werte des Videosignals monoton steigt. Beispielsweise wird das Spaltensignal durch Integration der Intensitäten des Videosignals über eine Erfassungsspalte gebildet.

Eine einfache Lösung zur gezielten Ansteuerung der Spaltenkoordinaten des Videosignals besteht darin, daß die Koordinate der Erfassungsspalten durch ein gegenüber dem Zeilensynchronsignal des Videosignals zeitverzögertes Signal über den Steuerrechner vorgegeben wird.

Durch den Steuerrechner kann der räumliche und zeitliche Abstand zu erfassender benachbarter Erfassungsspalten in geeigneter Weise vorgegeben werden. Der Zeitabstand kann der Leistungsfähigkeit der verwendeten elektronischen Baugruppen (A/D-Wandler, Speicher) angepaßt werden. Der Raumabstand kann zur Verringerung der Meßzeit vergrößert werden, wenn geringere Anforderungen an die Meßgenauigkeit gestellt werden.

Eine vorteilhafte Schaltungsanordnung zur Ermittlung der Position der Endflächen eines LWL in einer in Achsrichtung des LWL verlaufenden Koordinatenrichtung, welche folgende Baugruppen aufweist:

- eine den Endbereich des LWL aufnehmende Videokamera
- eine das Videosignal auswertende Erfassungseinheit
- einen die Helligkeitsinformation des Videosignals zur Ermittlung der Lagekoordinate der Endfläche der LWL auswertenden Steuerrechner, ist

gekennzeichnet durch folgende Schaltungselemente:

- eine Verzögerungseinheit zur Bildung von gegenüber den Zeichensynchronsignalen verzögerten Spaltensignalen
- eine Abtast/Halte-Stufe zur Erfassung der Werte des Videosignals einer Erfassungsspalte

- einen Analog/Digital-Wandler zur Umformung der erfaßten Werte des Videosignals
- einen Steuerrechner mit einer Steuerschaltung zur Vorgabe von zeitlich aufeinanderfolgenden Erfassungsvorgängen bei verschiedenen, den Bereich der Endfläche des LWL übergreifenden Erfassungskoordinaten $x_s$, und mit einer Rechnerschaltung zur Ermittlung der Lagekoordinate der Endfläche des LWL.

Für ein bevorzugtes Anwendungsgebiet ist vorgesehen, daß dem Steuerrechner eine Steuerschaltung und eine Rechenschaltung zur Bildung von Steuersignalen für einen den LWL axial verschiebenden Antrieb zugeordnet ist.

Die Erfindung und ihre Vorteile sind anhand der Beschreibung eines in der Zeichnung dargestellten vorteilhaften Ausführungsbeispiels näher erläutert.

Fig. 1 zeigt den Prinzipaufbau einer erfindungsgemäßen Schaltungsanordnung in Anwendung für die Einstellung des Spaltes zwischen zwei LWL-Enden.

Fig. 2 verdeutlicht die Wirkungsweise der vorliegenden Erfindung

Fig. 3 zeigt elektronische Schaltungsgruppen einer erfindungsgemäß gestalteten Erfassungseinheit nach Fig. 1.

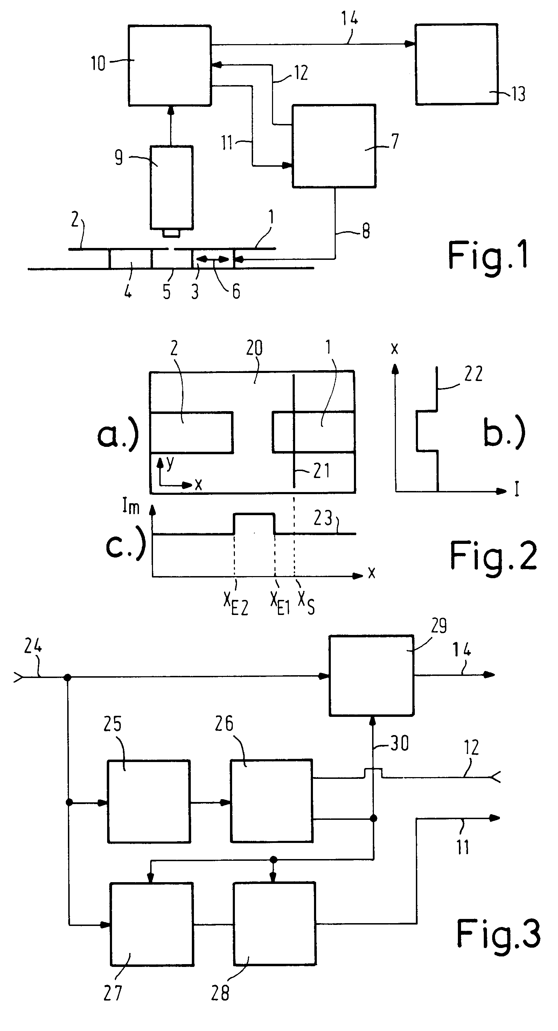

Zwei LWL 1 und 2 oder jeweils Gruppen von LWL eines LWL-Flachbandes sind gemäß Figur 1 einander koaxial gegenüberliegend auf Halterungen 3 und 4 geklemmt. Die Halterung 3 ist auf der Grundplatte 5 in Richtung des Doppelpfeils 6 mittels eines nicht dargestellten Antriebs in Achsrichtung der LWL 1 bzw. 2 verschiebbar. Die Endflächen der LWL 1 und 2 sollen aneinander geschoben werden, damit nachfolgend eine Verschweißung erfolgen kann.

Dazu müssen zunächst nach dem Auflegen der LWL 1 und 2 auf ihre Halterungen 3 und 4 vorhandene Istdaten der Lagekoordinaten der Endflächen der LWL 1 und 2 ermittelt und von einem Steuerrechner 7 ausgewertet werden, so daß danach Verschiebesignale zum Steuerrechner 7 über die Steuerleitung 8 auf den Antrieb für die Halterung 3 derart veranlaßt werden können, daß der Abstand zwischen den Endflächen der LWL 1 und 2 praktisch "Null" wird. Als Antrieb für die Halterung 3 ist insbesondere ein Schrittmotor geeignet, welcher über die Steuerleitung 8 eine dem erforderlichen Verschiebeweg entsprechende Anzahl von Schrittimpulsen erhält.

Von der Videokamera 9 wird der Abstandsbereich beider LWL 1 und 2 aufgenommen und ein Videosignal gebildet, welches Informationen über die Helligkeitswerte der Bildrasterpunkte sowie Synchronisiersignale, insbesondere ein Zeilensynchronisiersignal, enthält. Von der Erfassungseinheit 10 werden in anhand der Figuren 2 und 3 erläuterten Weise erfindungsgemäß nur jeweils einer Erfassungsspalte des aufgenommenen Bildes entsprechende Werte des Videosignals erfaßt und dem Steuerrechner 7 über die Leitung 11 zugeführt.

Der Steuerrechner 7 gibt über die Leitung 12 Befehlsignale an die Erfassungseinheit, welche die Lage der jeweils zu erfassenden Erfassungsspalte bestimmen, nämlich die Koordinate einer Zeile, an welcher jeweils das Videosignal festgehalten werden soll.

Der Monitor 13 enhält über die Leitung 14 das vollständige Videosignal der Videokamera 9 und zusätzlich ein Cursorsignal, durch welches an den Stellen der Erfassungsspalte ein Hell- oder ein Dunkelsignal überlagert wird.

Auf dem Bildschirm 20 des Monitors 19 wird gemäß Figur 2a der Abstandsbereich der Endflächen der LWL 1 und 2 sichtbar. Bei einer jeweiligen Spaltenkoordinate $x_s$, wo die Cursorlinie 21 sichtbar ist, werden in y-Richtung gemäß Kennlinie 22 (Figur 2b) verlaufende Intensitäten 1 des Videosignals erfaßt, gespeichert und zu einer mittleren Signalintensität $I_m$ umgeformt. Durch Verschiebung der Koordinate $x_s$ über den im Bildschirm 20 gezeigten Bereich ergibt sich über die x-Koordinate ein Verlauf der mittleren Signalintensität $I_m$ nach Kennlinie 23 (Fig. 2c). Die dabei an den Orten $x_{E1}$ und $x_{E2}$ der Endflächen der LWL 1 und 2 entstehenden Sprungstellen lassen sich als Information über die Ortskoordinaten $x_{E1}$ und $x_{E2}$ auswerten.

Der prinzipielle Aufbau der Erfassungseinrichtung 10 nach Fig. 1 ist in Fig. 3 dargestellt. Vom über die Leitung 24 eingehenden Videosignal wird das Zeilensynchronisiersignal mittels der Synchrontrennstufe 25 getrennt und über die Verzögerungseinheit 26 zeitverzögert der Abtast/Halte-Stufe 27 und dem A/D-Wandler 28 eingegeben. Das entsprechend der gewünschten Spaltenkoordinate $x_s$ gewünschte Ausmaß der Verzögerungszeit wird vom Steuerrechner 7 (Fig. 1) über die Leitung 12 vorgegeben. Die bei der Koordinate $x_s$ von der Abtast/Halte-Stufe festgehaltenen Intensitätswerte $I_s$ des Videosignals werden im A/D-Wandler 28 in digitale Signale umgewandelt, von wo sie über die Leitung 11 dem Steuerrechner zur Auswertung zugeführt werden.

Die Cursorlinie 21 wird mittels der Austaststufe 29 dadurch erzeugt, daß das eingehende Videosignal zu den der Koordinate $x_s$ entsprechenden Zeitpunkten vorzugsweise hell gesteuert wird. Die Information über den richtigen Cursor-Zeitpunkt erhält die Austaststufe 29 durch das über die Leitung 30 zugeführte verzögerte Ausgangssignal der Verzögerungseinheit 26.

Die vorliegende Erfindung wurde für den Anwendungsfall der Herstellung einer Schweißverbindung zweier LWL beschrieben. Die Erfindung ist jedoch in gleicher Weise anwendbar, wenn zwei LWL zur optischen Kopplung ohne Verschweißung in Anlage aneinander verschoben werden müssen. Statt LWL könnten auch die Abstände beliebiger ähnlicher Gebilde erfaßt und eingestellt werden.

Es kann zur Beschleunigung eines Einstellvorganges zweckmäßig sein, den Auswertebereich mittels manueller Verschiebung der Cursorlinie auf einen möglichst nahe den Endflächen liegenden Bereich einzugrenzen. Dazu mußte der Steuerrechner mit einer entsprechenden Eingabeschnittstelle versehen werden.

Zur Beschleunigung eines Einstellvorganges wäre es ebenfalls möglich, an mehreren Koordinaten $x_s$ gleichzeitig die Helligkeitsinformationen des Videosignals parallel in gemäß der Erfindung beschriebener Weise zu erfassen.

## Patentansprüche

1. Verfahren zur Ermittlung der Position der Endfläche eines Lichtwellenleiters (LWL) in einer in Achsrichtung des Lichtwellenleiters (1,2) verlaufenden Koordinatenrichtung x mit folgenden Verfahrensschritten:
   - der Endbereich des Lichtwellenleiters (1,2) wird mit einer Videokamera (9) aufgenommen, deren Zeilenrichtung in etwa parallel zur Achsrichtung des Lichtwellenleiters (1,2) verläuft,
   - das Videosignal der Videokamera (9) wird in eine Erfassungseinheit (10) ausgewertet,
   - gespeicherte Helligkeitsinformationen des Videosignals werden einem Steuerrechner (7) zugeführt, welcher die Positionskoordinate $(x_{E1}, x_{E2})$ der Endfläche des LWL (1,2) ermittelt,

   gekennzeichnet durch folgende Verfahrensschritte:
   - über die Erfassungseinheit (10) werden für eine Erfassungsspalte in einer zur Zeilenrichtung x senkrechten Richtung y an einer Koordinatenstelle $x_s$ aufeinanderfolgende Intensitätswerte des Videosignals gespeichert,
   - vom Steuerrechner werden die gespeicherten Intensitätswerte in ein Spaltensignal $I_m$ umgeformt und gespeichert,
   - danach werden zeitlich aufeinanderfolgend in einem die Endfläche des Lichtwellenleiters (1,2) übergreifenden Bereich in gleicher Weise weitere Spaltensignale $I_m$ gebildet und gespeichert,
   - schließlich wird aus dem Verlauf $I_m = f(x)$ die Lagekoordinate $(x_{E1}, x_{E2})$ der Endfläche des Lichtwellenleiters (1,2) ermittelt.

2. Verfahren nach Anspruch 1,
   dadurch gekennzeichnet, daß die Lagekoordinaten $x_{E1}$ und $x_{E2}$ der Endflächen benachbarter Lichtwellenleiter (1,2) ermittelt werden, und daß vom Steuerrechner (7) die axiale Verschiebung mindestens eines der Lichtwellenleiter mittels einer Antriebsrichtung derart veranlaßt wird, daß sich ein Sollabstand zwischen den Endflächen der LWL (1,2) ergibt.

3. Verfahren nach Anspruch 1 oder 2,
   dadurch gekennzeichnet, daß der Betrag des Spaltensignals $(I_m)$ aus dem Mittelwert der für eine Erfassungsspalte gespeicherten Werte (1) des Videosignals gebildet wird.

4. Verfahren nach einem der Ansprüche 1 bis 3,
   dadurch gekennzeichnet, daß die Koordinaten $(x_s)$ der Erfassungsspalten durch ein gegenüber dem Zeilensynchronsignal des Videosignals zeitverzögertes Signal über den Steuerrechner (7) vorgegeben wird.

5. Schaltungsanordnung zur Ermittlung der Position der Endfläche eines Lichtwellenleiters (1,2) in einer in Achsrichtung des Lichtwellenleiters (1,2) verlaufenden Koordinatenrichtung x mit
   - einer den Endbereich des LWL (1,2) aufnehmenden Videokamera (9),
   - mit einer das Videosignal auswertenden Erfassungseinheit (10),
   - einem die Helligkeitsinformation des Videosignals zur Ermittlung der Lagekoordinate $(x_{E1}, x_{E2})$ der Endfläche der LWL (1,2) auswertenden Steuerrechner (7),

   gekennzeichnet durch
   - eine Verzögerungseinheit (26) zur Bildung von gegenüber den Zeilensynchronsignalen verzögerten Spaltensignalen
   - eine Abtast/Halte-Stufe (27) zur Erfassung der Werte des Videosignals einer Erfassungsspalte,
   - einen Analog-Digital-Wandler (28) zur Umformung der erfaßten Werte des Videosignals,
   - einen Speicher zur Speicherung digitalisierter Werte des Videosignals,
   - einen Steuerrechner (7) mit einer Steuerschaltung zur Vorgabe von zeitlich aufeinanderfolgenden Erfassungsvorgängen bei verschiedenen, den Bereich der Endfläche des Lichtwellenleiters (1,2) übergreifenden Erfassungskoordinaten $x_s$, und mit einer Rechnerschaltung zur Ermittlung der Lagekoordinate $(x_{E1}, x_{E2})$ der Endfläche des Lichtwellenleiters (1,2).

**6.** Anordnung nach Anspruch 5, dadurch gekennzeichnet, daß dem Steuerrechner (7) eine Steuerschaltung und eine Rechenschaltung zur Bildung von Steuersignalen für einen den Lichtwellenleiter (1) axial verschiebenden Antrieb (3) zugeordnet ist.

## Claims

**1.** A method of determining the end face position of an optical waveguide in a coordinate direction (x) extending in the axial direction of the optical waveguide (1, 2), comprising the following steps:
- the end portion of the optical waveguide (1, 2) is recorded by means of a video camera (9) whose line direction extends substantially parallel to the axial direction of the optical waveguide (1, 2);
- the video signal of the video camera (9) is evaluated in a holding unit (10);
- stored luminance information components of the video signal are applied to a processor (7) which determines the position coordinates ($x_{E1}$, $x_{E2}$) of the end face of the optical waveguide (1, 2),

characterized by the following steps:
- successive intensity values of the video signal are stored by the holding unit which intensity values are taken along a slit in a direction (y) which is perpendicular to the line direction (x) at the area of a coordinate position ($x_s$);
- the processor converts the stored intensity values into a slit signal ($I_m$) and stores this signal;
- subsequently further slit signals ($I_m$) are similarly formed and stored thereby covering an area overlying the end face of the optical waveguide (1, 2);
- finally the position coordinate ($x_{E1}$, $x_{E2}$) of the end face of the optical waveguide (1, 2) is determined from the variation $I_m = f(x)$.

**2.** A method as claimed in Claim 1, characterized in that the position coordinates $x_{E1}$ and $x_{E2}$ of the end faces of neighbouring optical waveguides (1, 2) are determined and in that the processor (7) causes at least one of the optical waveguides to be axially displaced by means of a drive unit in such a way that a nominal distance between the end faces of the optical waveguides (1, 2) results.

**3.** A method as claimed in Claim 1 or 2, characterized in that the value of the slit signal ($I_m$) increases monotonically with a mean value of the video signal values (I) stored for a slit.

**4.** A method as claimed in any one of Claims 1 to 3, characterized in that the coordinate ($x_s$) of the slit is determined by the processor (7) via a signal which is time-delayed with respect to the line synchronising signal of the video signal.

**5.** A circuit arrangement for determining the end face position of an optical waveguide (1, 2) in a coordinate direction x extending in the axial direction of the optical waveguide (1, 2), comprising:
- a video camera (9) for a recording the end portion of the optical waveguide (1, 2);
- a holding unit (10) for evaluating the video signal;
- a processor (7) for evaluating the luminance information of the video signal to determine the position coordinate ($x_{E1}$, $x_{E2}$) of the end face of the optical waveguide (1, 2),

characterized by
- a delay unit (26) for forming slit signals which are delayed with respect to the line synchronising signals;
- a sample-and-hold stage (27) for holding the values of the video signal of a slit;
- an A/D converter (28) for converting the values of the video signal;
- a memory for storing digitised values of the video signal;
- a processor (7) comprising a control circuit for initiating detection processes at different coordinates positions $x_s$ covering an area overlying the end face of the optical waveguide (1, 2) and a computing circuit for determining the position coordinate ($x_{E1}$, $x_{E2}$) of the end face of the optical waveguide (1, 2).

**6.** An arrangement as claimed in Claim 5, characterized in that the processor (7) comprises a control circuit and a computing circuit for forming control signals for a drive means (holder 3) axially displacing the optical waveguide (1).

## Revendications

**1.** Procédé pour déterminer la position d'une face terminale d'un guide de lumière dans une direction de coordonnées x s'étendant dans le sens axial du guide de lumière (1, 2) comportant les étapes suivantes:
- une image de la partie terminale du guide de lumière (1, 2) est enregistrée, par une caméra vidéo (9) dont la direction de ligne s'étend à peu près parallèlement au sens axial du guide de lumière (1, 2),

- le signal vidéo enregistré par la caméra vidéo (9) est évalué dans une unité de mémorisation (10),
- des informations de luminance de signal vidéo mémorisées sont appliquées à un ordinateur de commande (7) déterminant les coordonnées de position ($x_{E1}$, $x_{E2}$) de la face terminale du guide de lumière (1, 2),

caractérisé par la mise en oeuvre des étapes suivantes

- l'unité de mémorisation (10) mémorise des valeurs d'intensité successives du signal vidéo pour une colonne s'étendant dans un sens y perpendiculaire à la direction de ligne x dans une position de coordonnées $x_s$,
- l'ordinateur de commande convertit les valeurs d'intensité mémorisées en un signal de colonne $I_m$ pour mémoriser ce dernier,
- ensuite d'autres signaux de colonne $I_m$ décalés dans le temps sont formés de façon similaire dans une zone recouvrant la surface terminale du guide de lumière (1, 2) pour être mémorisés,
- finalement la coordonnée de position ($x_{E1}$, $x_{E2}$) de la face terminale du guide de lumière (1, 2) est déterminée en partant de l'allure $I_m = f(x)$.

2. Procédé selon la revendication 1, caractérisé en ce que les coordonnées de position $x_{E1}$ et $x_{E2}$ des faces terminales de guides de lumière voisins (1, 2) sont déterminées et en ce que l'ordinateur de commande (7) provoque le déplacement axial au moins de l'un des guides de lumière par l'intermédiaire d'un dispositif d'entraînement de manière à obtenir une distance nominale entre les faces terminales des guides de lumière (1, 2).

3. Procédé selon la revendication 1 ou 2, caractérisé en ce que la valeur du signal de colonne ($I_m$) augmente monotonement d'une valeur moyenne des valeurs du signal vidéo mémorisées (I) pour une colonne.

4. Procédé selon l'une des revendications 1 à 3, caractérisé en ce que les coordonnées ($x_s$) des colonnes sont prédéterminées par l'ordinateur de commande (7) au moyen d'un signal décalé dans le temps vis-à-vis du signal de synchronisation de ligne du signal vidéo.

5. Circuit pour déterminer la position des faces terminales d'un guide de lumière (1, 2) dans une direction de coordonnées x s'étendant dans le sens axial du guide de lumière (1, 2), comportant:

- une caméra vidéo (9) pour enregistrer une image de la partie terminale du guide de lumière (1, 2)
- une unité de mémorisation (10) évaluant le signal vidéo
- un ordinateur de commande (7) évaluant les informations de luminance du signal vidéo pour déterminer la coordonnée de position ($x_{E1}$, $x_{E2}$) de la face terminale du guide de lumière (1,2),

caractérisé par

- une unité de retard (26) pour former des signaux de colonne retardés vis-à-vis des signaux de synchronisation de ligne,
- un étage d'échantillonnage et de maintien (27) pour mémoriser les valeurs du signal vidéo provenant d'une colonne,
- un convertisseur analogique/numérique (28) pour convertir les valeurs de signal vidéo mémorisées,
- une mémoire pour mémoriser des valeurs numériques du signal vidéo,
- un ordinateur de commande (7) comportant un circuit de commande pour initier des processus de mémorisation chronologiques dans le cas de positions de coordonnée différentes $x_s$ couvrant la zone de la surface terminale du guide de lumière (, 2), ainsi qu'un circuit de calcul pour déterminer la coordonnée de position ($x_{E1}$, $x_{E2}$) de la face terminale du guide de lumière (1, 2).

6. Dispositif selon la revendication 5, caractérisé en ce qu'un circuit de commande et un circuit de calcul conçus pour former des signaux de commande destinés à un dispositif d'entraînement (3) déplaçant axialement le guide de lumière (1) sont associés à l'ordinateur de commande (7).

Fig.1

a.)

b.)

c.)

Fig.2

Fig.3